# EUROPEAN PATENT SPECIFICATION

(11) **EP 3 629 626 B1**
(45) Date of publication and mention of the grant of the patent: **05.04.2023**
(21) Application number: 18816916.3
(22) Date of filing: 12.06.2018
(51) Int. Cl.: H04W 36/00, H04W 76/27, H04W 68/00

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 16.06.2017 CN 201710459711
(43) Date of publication of application: 01.04.2020
(73) Proprietor: Huawei Technologies Co., Ltd., Longgang District Shenzhen, Guangdong 518129 (CN)
(72) Inventor: JIN, Yinghao, Shenzhen Guangdong 518129 (CN); YANG, Yang, Shenzhen Guangdong 518129 (CN); GENG, Tingting, Shenzhen Guangdong 518129 (CN)
(74) Representative: Pfenning, Meinig & Partner mbB
(86) International application number: PCT/CN2018/090729
(87) International publication number: WO 2018/228349

(56) References cited:
- CN-A- 103 797 846
- ANONYMOUS: "3rd Generation Partnership Project; Technical Specification Group Services and System Aspects; Study on Architecture for Next Generation System (Release 14)", 3GPP STANDARD ; TECHNICAL REPORT ; 3GPP TR 23.799, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V14.0.0, 16 December 2016 (2016-12-16), pages 1-527, XP051295448, [retrieved on 2016-12-16]
- SAMSUNG: "NR RRC state transitions and signalling procedures", 3GPP DRAFT; R2-1704145_NR_STATES_TRANSITION_V17, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Hangzhou, China; 20170515 - 20170519 14 May 2017 (2017-05-14), XP051274747, Retrieved from the Internet: URL:http://www.3gpp.org/ftp/Meetings_3GPP_ SYNC/RAN2/Docs/ [retrieved on 2017-05-14]
- LG ELECTRONICS INC: "Offloading UEs in RRC INACTIVE", 3GPP DRAFT; R2-1701825_OFFLOADING_UES_IN_RRC_INACTIVE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20170213 - 20170217 12 February 2017 (2017-02-12), XP051212391, Retrieved from the Internet: URL:http://www.3gpp.org/ftp/Meetings_3GPP_ SYNC/RAN2/Docs/ [retrieved on 2017-02-12]
- INTERDIGITAL COMMUNICATIONS: "RAN Paging in the INACTIVE State", 3GPP DRAFT; R2-1701196 (NR SI AI10223 PAGING ASPECTS FOR INACTIVE), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA , vol. RAN WG2, no. Athens, Greece; 20170213 - 20170217 12 February 2017 (2017-02-12), XP051211885, Retrieved from the Internet: URL:http://www.3gpp.org/ftp/Meetings_3GPP_ SYNC/RAN2/Docs/ [retrieved on 2017-02-12]
- OPPO: "Details of Network Initiated Release from INACTIVE to IDLE", 3GPP DRAFT; R2-1707763-DETAILSEOFENETWORKEINITIATEDERE LEASEEFROMEINACTIVEETOEIDLE, 3RD GENERATION PARTNERSHIP PROJECT (3GPP), MOBILE COMPETENCE CENTRE ; 650, ROUTE DES LUCIOLES ; F-06921 SOPHIA-ANTIPO , vol. RAN WG2, no. Berlin, Germany; 20170821 - 20170825 20 August 2017 (2017-08-20), XP051317723, Retrieved from the Internet: URL:http://www.3gpp.org/ftp/Meetings_3GPP_ SYNC/RAN2/Docs/ [retrieved on 2017-08-20]
- HUAWEI: "Network initiated UE state transition from INACTIVE to IDLE", 3GPP DRAFT; R3-174556, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Reno, Nevada, US; 20171127 - 20171201 18 November 2017 (2017-11-18), XP051373385, Retrieved from the Internet: URL:http://www.3gpp.org/ftp/tsg%5Fran/WG3% 5FIu/TSGR3%5F98/Docs/ [retrieved on 2017-11-18]
- HUAWEI: "DL signalling handling in INACTIVE state", 3GPP DRAFT; R3-174554, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Reno, Nevada, USA; 20171127 - 20171201 18 November 2017 (2017-11-18), XP051373383, Retrieved from the Internet: URL:http://www.3gpp.org/ftp/tsg%5Fran/WG3% 5FIu/TSGR3%5F98/Docs/ [retrieved on 2017-11-18]
- HUAWEI: "RAN paging triggered inactive mode UE release", 3GPP DRAFT; R3-173081, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Berlin, Germany; 20170821 - 20170825 21 August 2017 (2017-08-21), XP051319914, Retrieved from the Internet: URL:http://www.3gpp.org/ftp/Meetings_3GPP_ SYNC/RAN3/Docs/ [retrieved on 2017-08-21]
- HUAWEI ET AL: "RAN initiated Paging", 3GPP DRAFT; R2-1803638 RAN INITIATED PAGING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20180226 - 20180302 16 February 2018 (2018-02-16), XP051400661, Retrieved from the Internet: URL:http://www.3gpp.org/ftp/tsg%5Fran/WG2% 5FRL2/TSGR2%5F101/Docs/ [retrieved on 2018-02-16]
- anonymous: "3rd Generation Partnership Project; Technical Specification Group Services and System Aspects; Study on Architecture for Next Generation System (Release 14)", 3GPP TR23.799v14.0.0, vol. SA WG2, no. V14.0.0, 16 December 2016 (2016-12-16), pages 1-527, XP051295448,
- Ericsson: "Periodic RAN area updates in RRC_INACTIVE", 3GPP TSG RAN WG2 #98 R2-1704121, no. R2-1704121, 6 May 2017 (2017-05-06), XP051264282, Hangzhou, China
- Ericsson: "RAN area updating due to mobility in RRC_INACTIVE", 3GPP TSG RAN WG2 #98 R2-1704120, no. R2-1704120, 6 May 2017 (2017-05-06), XP051264281, Hangzhou, China

## Description

### TECHNICAL FIELD

The present invention relates to a communications method, a communications device and a computer-readable storage medium.

### BACKGROUND

In a long term evolution (Long Term Evolution, LTE) system, a terminal device is connected to an access network (radio access network, RAN) by using a radio link and then is connected to a core network (core network, CN), to implement mobile communication of the terminal device. Based on a status of a communications service, a status of the terminal device is classified into a connected (connected) mode and an idle (idle) mode. When the terminal device performs service communication, the terminal device is in the connected mode; and when the terminal device does not perform service communication, the terminal device is in the idle mode. For the terminal device in the connected mode, the terminal device maintains a connection to a RAN side, and the RAN side maintains a connection to a CN side, and both the RAN side and the CN side store a context of the terminal device, to implement communication between the terminal device and a network. The context of the terminal device includes a security context of the terminal device, an aggregate maximum bit rate of the terminal, information about a current session of the terminal device (for example, a network slice corresponding to the session or a gateway corresponding to the session), and the like. For the terminal device in the idle mode, the terminal device is disconnected from the RAN side and the RAN side is also disconnected from the CN side, and only the CN side stores the context of the terminal device.

Document ANONYMOUS, "3rd Generation Partnership Project; Technical Specification Group Services and System Aspects; Study on Architecture for Next Generation System (Release 14)", 3GPP STANDARD ; TECHNICAL REPORT; 3GPP TR 23.799, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20161216), vol. SA WG2, no. V14.0.0, pages 1 - 527, XP051295448 describes a system architecture for the next generation mobile networks.

Document SAMSUNG, "NR RRC state transitions and signalling procedures", vol. RAN WG2, no. Hangzhou, China; 20170515 - 20170519, (20170514), 3GPP DRAFT; R2-1704145_NR_STATES_TRANSITION_V17, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings_3GPP_SYNC/RAN2/Docs/, (20170514), XP051274747 presents considerations on the NR RRC state machine, possible state transitions and related RRC signaling.

Document LG ELECTRONICS INC, "Offloading UEs in RRC INACTIVE", vol. RAN WG2, no. Athens, Greece; 20170213 - 20170217, (20170212), 3GPP DRAFT; R2-1701825_OFFLOADING_UES_IN_RRC_INACTIVE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings_3GPP_SYNC/RAN2/Docs/, (20170212), XP051212391 describes methods for offloading UEs in NR INACTIVE.

Document INTERDIGITAL COMMUNICATIONS, "RAN Paging in the INACTIVE State", vol. RAN WG2, no. Athens, Greece; 20170213 - 20170217, (20170212), 3GPP DRAFT; R2-1701196 (NR SI AI10223 PAGING ASPECTS FOR INACTIVE), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRA, URL: http://www.3gpp.org/ftp/Meetings_3GPP_SYNC/RAN2/Docs/, (20170212), XP051211885 discusses aspects of the RAN-based Paging Area for the INACTIVE state for NR.

With rapid development of wireless communications technologies, a 5th generation (5th Generation, 5G) wireless communications technology has been a popular subject in the industry currently. A new state is introduced to a terminal device in a 5G network, and is referred to as an inactive (inactive) mode. The inactive mode may be considered as an intermediate state between the connected mode and the idle mode. When the terminal device does not perform service communication for a short time, the terminal device may be in the inactive mode. If the terminal device in the inactive mode needs to send a small amount of data that does not have a high requirement on service quality, the terminal device can directly send the data to a network when in the inactive mode. If the terminal device needs to send data that has a high requirement on service quality, the terminal device may transit to an active mode, and then sends the data to the network. If the terminal device has no data to be sent for a long time, the terminal device may transit to the idle mode. For the terminal device in the inactive mode, a RAN side maintains a connection to a CN side for the terminal device in the inactive mode, and both the RAN side and the CN side store a context of the terminal device. A RAN device that maintains a connection between the RAN side of the terminal device in the inactive mode and a control plane of the CN side of the terminal device in the inactive mode is referred to as an anchor RAN device. The anchor RAN device stores the context of the terminal device, so that when the terminal device needs to transit to the connected mode, the terminal device may quickly establish a channel used for communication with the CN side.

If the terminal device in the inactive mode has no data to be sent for a long time or the anchor RAN device has excessively high load, the anchor RAN device needs to release the context of the terminal device. In an actual network, a terminal device in the inactive mode may move freely, and camp on a cell controlled by a RAN device other than an anchor RAN device of the terminal device. In this scenario, currently, there is no proper solution to effectively determining a status of a terminal device and processing a context of the terminal device.

### SUMMARY

The invention is set out in the appended set of claims.

### BRIEF DESCRIPTION OF DRAWINGS

The following briefly describes the accompanying drawings used in descriptions of embodiments of this application or the prior art.
FIG. 1 shows a communication scenario according to an example;
FIG. 2 is a schematic diagram of state transition of a terminal device according to an example;
FIG. 3 is a schematic flowchart of a communications method according to an example;
FIG. 4 is a schematic flowchart of another communications method according to an example;
FIG. 5 is a schematic block diagram of a terminal device according to an example;
FIG. 6 is another schematic block diagram of a terminal device according to an example;
FIG. 7 is a schematic block diagram of a RAN device according to an example; and
FIG. 8 is another schematic block diagram of a RAN device according to an example.

### DESCRIPTION OF EMBODIMENTS

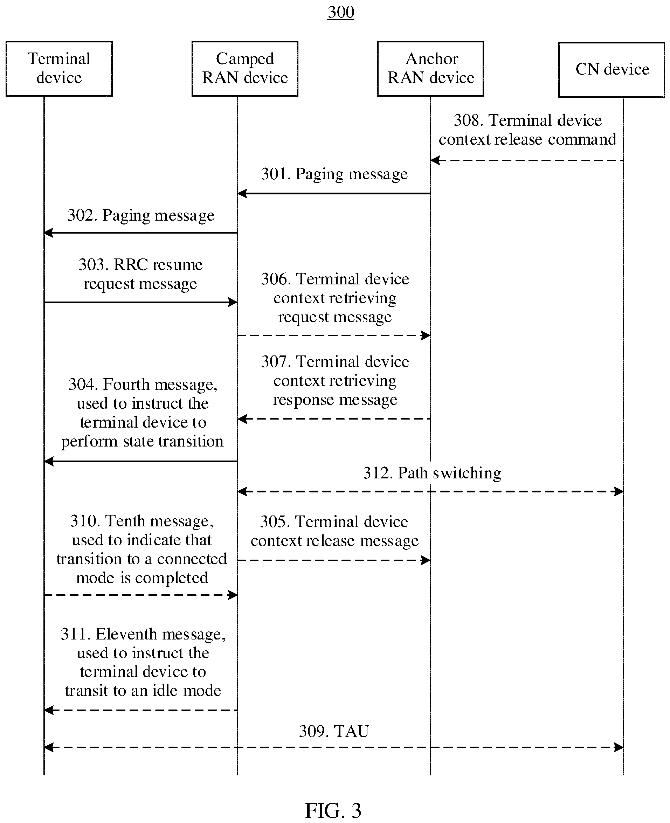

The invention is illustrated by the embodiments shown in figure 3 and the associated discussion. All other references to embodiments are to be understood as examples useful for understanding the invention.

The following describes the embodiments of this application with reference to the accompanying drawings in the embodiments of this application.

In this application, the word "exemplary" is used to represent "giving an example, an illustration, or a description". Any embodiment described as "exemplary" in this application are not necessarily explained as being better or advantageous over another embodiment. To enable any person skilled in the art to implement and use the present invention, the following descriptions are provided. In the following descriptions, details are set forth for the purpose of explanation. It should be understood that a person of ordinary skill in the art can learn that the present invention can also be implemented without these specific details. In other examples, well-known structures and processes are not described in detail to avoid obscuring the description of the present invention with unnecessary details. Therefore, the present invention is not limited to the described embodiments but is consistent with the widest scope that complies with the principles and features disclosed in this application.

In the specification, claims, and accompanying drawings of the present invention, the terms "first", "second", "third", "fourth", and the like (if existent) are intended to distinguish between similar objects but do not necessarily describe a specific order or sequence. It should be understood that the data termed in such a way is interchangeable in proper circumstances, so that the embodiments of the present invention described herein can be implemented in other orders than the order illustrated or described herein. Moreover, the terms "include", "contain", and any variant thereof mean to cover the non-exclusive inclusion, for example, a process, a method, a system, a product, or a device that includes a list of steps or units is not necessarily limited to those steps or units that are expressly listed, but may include other steps or units not expressly listed or inherent to such a process, method, product, or device.

The terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Specific embodiments are used below to describe in detail the technical solutions of the present invention. The following several specific embodiments may be combined with each other, and a same or similar concept or process may not be described repeatedly in some embodiments.

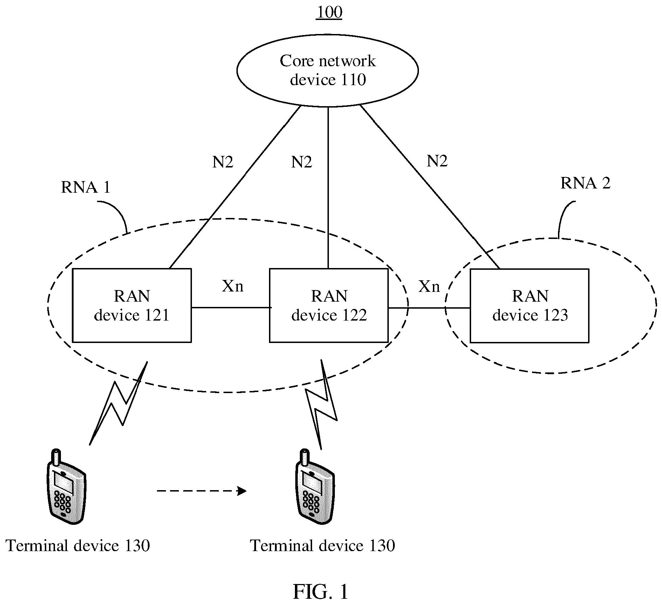

A communications method and apparatus that are provided in the embodiments of this application are applicable to state transition and context processing when a terminal device is in an inactive mode. FIG. 1 shows a communications system 100 according to an example. The communications system 100 includes a CN device 110 and RAN devices 121 to 123. The RAN devices 121 to 123 and the CN device 110 may communicate with each other through N2 interfaces. The RAN devices 121 to 123 may further communicate with each other through Xn interfaces. Similar to a concept of a tracking area (tracking area, TA) in LTE, a RAN-based notification area (RAN based notification area, RNA) includes a plurality of RAN devices, and is used by a network to page a terminal device 130 in an inactive mode in a range of the RNA. As shown in FIG. 1, an RNA includes the RAN devices 121 and 122, and is referred to as an RNA 1; and another RNA includes the RAN device 123, and is referred to as an RNA 2. In an application scenario of this example, the terminal device 130 performs data transmission with the RAN device 121 by using a radio link, and enters an inactive mode after the data transmission is completed. Then, the terminal device 130 moves and camps on a cell controlled by the RAN device 122. Further, the terminal device 130 may move and camp on a cell controlled by the RAN device 123. It should be understood that this is merely an example herein. In an actual system, the communications system 100 may include a plurality of CN devices, a plurality of RAN devices, and a plurality of terminal devices. One RNA may include a plurality of RAN devices. For example, the RNA 1 and the RNA 2 may further include another RAN device.

The RAN device in FIG. 1 may be an access point (access point, AP) in a wireless local area network (Wireless Local Area Networks, WLAN), a base transceiver station (base transceiver station, BTS) in GSM or CDMA, a NodeB (NodeB, NB) in WCDMA, or may be an evolved NodeB (evolved Node B, eNB or eNodeB) in LTE. Alternatively, the RAN device may be a relay node, an access point, a vehicle-mounted device, a wearable device, a network device in a future 5G network, or an access network device in a future evolved PLMN network. For example, the RAN device may be a 5G base station (for example, a next generation NodeB (next-generation Node B, gNB) or a next-generation radio (next-generation radio, NR) node), a transmission and reception point (transmission and reception point, TRP), a centralized processing unit (centralized unit, CU), or a distributed processing unit (distributed unit, DU). It should be understood that the terminal device communicates with the RAN device by using a transmission resource (for example, a frequency domain resource, or a spectrum resource) used by a cell managed by the RAN device. The cell may be a macro cell (macro cell), a hyper cell (hyper cell), or a small cell (small cell). The small cell herein may include a metro cell (metro cell), a micro cell (micro cell), a pico cell (pico cell), a femto cell (femto cell), and the like. These cells are characterized by small coverage, low transmit power, and the like, and are suitable for providing a high-rate data transmission service.

The terminal device may also be referred to as user equipment (user equipment, UE), an access terminal, a subscriber unit, a subscriber station, a mobile station, a mobile station, a remote station, a remote terminal, a mobile device, a user terminal, a terminal, a wireless communications device, a user agent, or a user apparatus. The terminal device may be a station (station, ST) in the WLAN, and may be a cellular phone, a cordless phone, a session initiation protocol (Session Initiation Protocol, SIP) phone, a wireless local loop (Wireless Local Loop, WLL) station, a personal digital assistant (personal digital assistant, PDA) device, a handheld device with a wireless communication function, a relay device, a computing device, or another processing device connected to a wireless modem, a vehicle-mounted device, a wearable device, and a next generation communications system, such as a terminal device in the 5G network or a terminal device in the future evolved public land mobile network (public land mobile network, PLMN) network. By way of example, and not limitation, in this implementation, the terminal device may alternatively be a wearable device. The wearable device may also be referred to as a wearable intelligent device, and is a generic name of wearable devices developed by intelligently designing daily wear by using a wearable technology, such as glasses, gloves, a watch, clothing, or shoes. A wearable device is a portable device that can be directly worn on a body or integrated into clothes or an accessory of a user. The wearable device is not merely a hardware device, and further implements powerful functions through software support, data exchange, and cloud interaction. Generalized wearable intelligent devices include full-featured and large-size devices that can implement complete or partial functions without depending on smartphones, such as smart watches or smart glasses, and devices that focus on only one type of application function and need to work with other devices such as smartphones, such as various smart bands or smart jewelry for monitoring physical signs.

In a wireless network, for example, in the 5G network, a terminal device may be in three states: a connected mode, an inactive mode, and an idle mode. When the terminal device has no data to be transmitted for a short time, the terminal device may be in the inactive mode. If the terminal device in the inactive mode needs to send a small amount of data that does not have a high requirement on service quality, the terminal device can directly send the data to a network when in the inactive mode. If the terminal device needs to send data that has a high requirement on service quality or a large amount of data, the terminal device may transit to the active mode, and then sends the data to the network. If the terminal device has no data to be sent for a long time, the terminal device may transit to the idle mode. For the terminal device in the inactive mode, the terminal device is disconnected from a RAN side, the RAN side and a CN side remain connected, and both the RAN side and the CN side store a context of the terminal device. An anchor RAN device stores the context of the terminal device, and maintains a connection between the RAN side of the terminal device and a control plane of the CN side of the terminal device. Usually, the anchor RAN device transits the terminal device from the connected mode to the inactive mode. To be specific, the terminal device performs data transmission when in the connected mode by using a cell controlled by the anchor RAN device, and transits to the inactive mode after the data transmission is completed. Due to mobility, the terminal device in the inactive mode may move from a first cell controlled by the anchor RAN device to a second cell controlled by another RAN device. In this case, the terminal device performs cell reselection, camps on the second cell, and maintains downlink synchronization with the second cell. The RAN device that controls the second cell is referred to as a camped RAN device.

In the application scenario of the example shown in FIG. 1, the terminal device 130 performs data transmission with the RAN device 121 by using the radio link. In this case, the terminal device 130 is in the connected mode, and the RAN device 121 is an anchor RAN device of the terminal device 130. Both the RAN device 121 and the core network device 110 store a context of the terminal device 130. After the data transmission is completed, the terminal device 130 enters the inactive mode. In this case, no data is transmitted between the terminal device 130 and the RAN device 121, or a small amount of data is transmitted. Both the RAN device 121 and the core network device 110 still store the context of the terminal device 130. Subsequently, the terminal device 130 moves and enters the cell controlled by the RAN device 122. In this case, the terminal device 130 performs cell
reselection and camps on the cell controlled by the RAN device 122. In this case, the RAN device 122 is a camped RAN device of the terminal device 130, and the terminal device 130 still remains in the inactive mode. However, the RAN device 122 does not have the context of the terminal device 130, and the context of the terminal device 130 is still stored in the RAN device 121 and the core network device 110. When a network needs to transmit data of the terminal device 130 to the terminal device 130, or needs to send signaling to the terminal device 130, the network first pages the terminal device in an RNA. For example, when the terminal device 130 is located in the RNA 1, the network pages the terminal device 130 in the RNA 1; and when the terminal device 130 moves into the RNA 2, the terminal device 130 needs to perform an RNA update. This is similar to a case in which a terminal device needs to perform a TA update (tracking area update, TAU) after moving out of a TA range in LTE. The network pages the terminal device 130 in the RNA 2. It should be understood that, in the wireless network such as the 5G network, the CN side manages the terminal device, and the terminal device also has a tracking area or a registration area (registration area, RA). When moving out of the TA/RA, the terminal device needs to perform a TAU or an RA update (registration area update, RAU). When moving from one TA/RA to another TA/RA, the terminal device needs to perform the TAU/RAU, and the network reallocates a control plane device of the CN side to the terminal device in a new TA/RA to serve the terminal device.

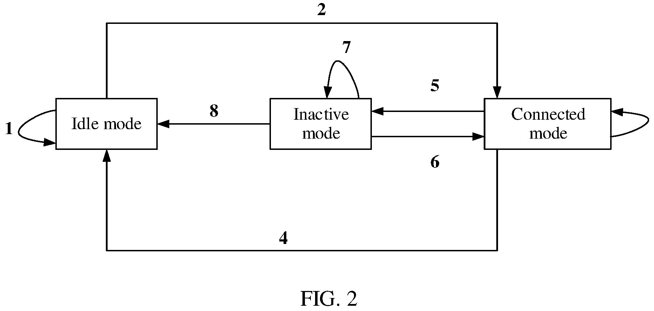

FIG. 2 shows state transition and corresponding context processing of a terminal device according to an example. Based on mobility of the terminal device and depending on whether data transmission exists, there may be eight types of state transition indicated by arrows 1, 2, 4, 5, 6, 7 and 8 shown in FIG. 2. In various types of state transition, a mobile network performs corresponding processing on a context of the terminal device based on state transition of the terminal device. In this example, the fourth to the eighth types of state transition in FIG. 2 and corresponding context processing are mainly involved. Therefore, the following emphatically describes these scenarios. In the fourth type of state transition indicated by arrow 4, to be specific, in a scenario in which the terminal device transits from a connected mode to an idle mode, when the terminal device in the connected mode does not transmit data within a period of time that is set by a system, or a radio link failure occurs and a radio resource control (radio resource control, RRC) connection fails to be resumed, the network instructs the terminal device to transit to the idle mode. In this case, a serving RAN device releases the context of the terminal device. The context is established and stored by the terminal device on a network side during data transmission. In the fifth type of state transition indicated by arrow 5, to be specific, in a scenario in which the terminal device transits from the connected mode to an inactive mode, when the terminal device in the connected mode does not transmit data within a period of time that is set by the system, the network instructs the terminal device to transit to an inactive mode. In this case, the serving RAN device still stores the context of the terminal device. In the sixth type of state transition indicated by arrow 6, to be specific, in a scenario in which the terminal device transits from the inactive mode to the connected mode, when the terminal device in the inactive mode needs to transmit data that has a high requirement on service quality or a large amount of data, the network instructs the terminal device to transit to the connected mode. In this case, the serving RAN device stores and may update the context of the terminal device. In the seventh type of state transition indicated by arrow 7, to be specific, in a scenario in which the terminal device remains in the inactive mode, the terminal device in the inactive mode performs cell reselection or performs an RNA update in an RNA. For intra-RNA cell reselection, the context of the terminal device that is stored on a RAN side does not need to be changed. When the RNA update is performed and an anchor RAN device of the terminal device changes, an original anchor RAN device of the terminal device needs to transfer the context of the terminal device to a current anchor RAN device of the terminal device. In the eighth type of state transition indicated by arrow 8, to be specific, in a scenario in which the terminal device transits from the inactive mode to the idle mode, when the terminal device in the inactive mode does not transmit data within a period of time that is set by the system, or when a quantity of periodic RNA updates reaches a threshold, or when the terminal device performs heterogeneous access network cell reselection, the network instructs the terminal device to transit to the idle mode. In this case, the RAN side releases the context of the terminal device.

During mobile communication, the terminal device is connected to the RAN device by using a radio link, to establish a communications channel between the terminal device and the network side. If the terminal device in the inactive mode has no data to be sent for a long time or the anchor RAN device has excessively high load, the anchor RAN device needs to release the context of the terminal device and transit the terminal device to the idle mode. Due to mobility, the terminal device may camp on a cell controlled by another RAN device. Therefore, the anchor RAN device cannot directly page the terminal device, to notify the terminal device that the context of the terminal device needs to be released. In addition, for example, because of overload, the anchor RAN device needs to release the context of the terminal device, but in this case, a camped RAN device of the terminal device has sufficient resources. In this case, according to transition of the anchor RAN device, the camped RAN device may be used as a current anchor RAN device of the terminal device, and the current anchor RAN device may continue to enable the terminal device to remain in the inactive mode, so that the terminal device does not need to transit from the idle mode to the connected mode when needing to send data. Instead, the terminal device can directly send the data when in the inactive mode, thereby reducing a communication delay.

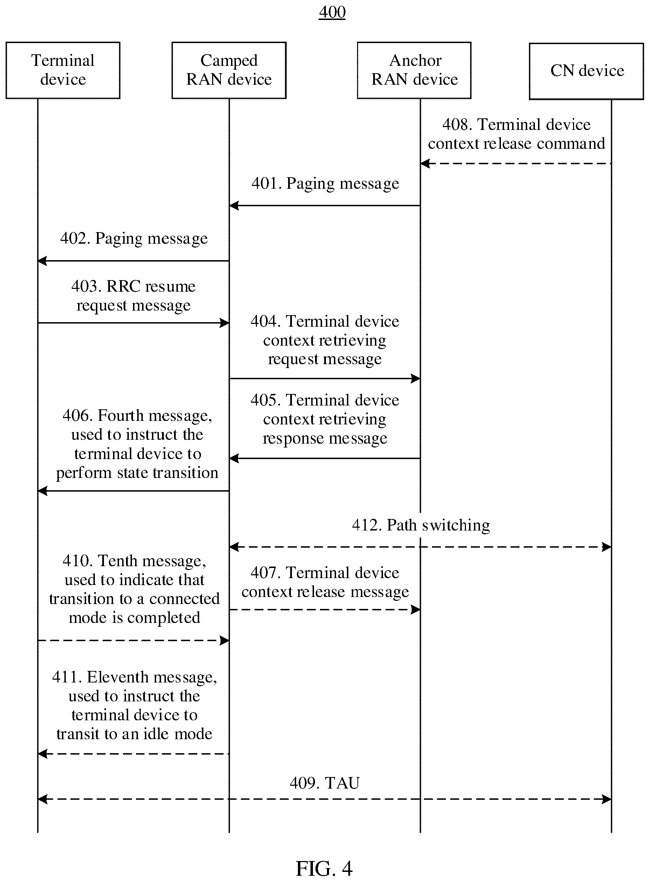

The following describes in detail the method implementations of this application with reference to FIG. 3 and FIG. 4. Specific implementations are used below to describe in detail the technical solutions of this application. The following several specific implementations may be combined with each other, and a same or similar concept or process may not be described repeatedly in some implementations. It should be understood that FIG. 3 and FIG. 4 are schematic flowcharts of communications methods according to examples, and show detailed communication steps or operations of the methods. However, these steps or operations are merely examples, and in the examples, other operations or variations of the operations in FIG. 3 and FIG. 4 may be further performed. In addition, all the steps in FIG. 3 and FIG. 4 may be separately performed in a sequence different from that presented in FIG. 3 and FIG. 4, and it is possible that not all of the operations in FIG. 3 and FIG. 4 need to be performed.

FIG. 3 is a schematic flowchart of a context processing method for a terminal device according to an example. The method 300 may be applied to the process of state transition of the terminal device shown in FIG. 2. The procedure in FIG. 3 is applied to a case in which an anchor RAN device needs to release a context of a terminal device in an inactive mode. The procedure includes the following steps.

301. A first RAN device sends a first message to a second RAN device, where the first message includes a first identifier of the terminal device and an instruction of releasing a context of the terminal device. Specifically, the instruction of releasing the context of the terminal device may be at least one of the following: instructing the terminal device to transit to an idle mode, instructing to perform load balancing, instructing the terminal device to perform an RNA update, or instructing the terminal device to perform a TAU/RAU. The first message is used to instruct the second RAN device to page the terminal device. The first RAN device is a RAN device, for example, an anchor RAN device, storing a connection between a RAN side of the terminal device in the inactive mode and a control plane of a CN side of the terminal device in the inactive mode. The first RAN device stores the context of the terminal device. The second RAN device is a camped RAN device of the terminal device. Optionally, the first message is a paging message.

In this example, the first RAN device determines to release the context of the terminal device in the inactive mode. This may be because the terminal device does not transmit data within a period of time that is set by a system, or may be because load of the first RAN device is excessively high, and so on. In this case, the first RAN device may release the context of the terminal device and transit a state of the terminal device to the idle mode, or transfer the context of the terminal device to another RAN device and keep the terminal device in the inactive mode, and so on. Therefore, the first RAN device sends the first message to the second RAN device, to instruct the second RAN device to page the terminal device. It should be understood that the first RAN device may send the first message to some or all RAN devices in an RNA in which the first RAN device is located, to page the terminal device in a range of the RNA. In this specification, only the second RAN device that serves as the camped RAN device of the terminal device is used as an example for description. In an actual network, the first RAN device sends the first message to the some or all the RAN devices in the RNA in which the first RAN device is located.

In an example, the first RAN device needs to transit the terminal device from the inactive mode to the idle mode. In this case, the first RAN device sends, to the second RAN device, the first message used to page the terminal device, and the first message includes the first identifier of the terminal device and instruction information for instructing the terminal device to transit to the idle mode. The first identifier of the terminal device may be a non-access stratum (non-access stratum, NAS) identifier, for example, an IMSI or a TMSI, allocated by the CN side to the terminal device, or may be an access stratum (access stratum, AS) identifier, for example, a resume identifier (resume ID), allocated by the RAN side to the terminal device. The first identifier of the terminal device may uniquely identify the terminal device in the range of the RNA.

In another example, the first RAN device needs to perform load balancing. For example, when load of the first RAN device is excessively high, the first RAN device needs to reduce the load of the first RAN device, so that the first RAN device releases the context of the terminal device in the inactive mode. In this case, the first RAN device sends, to the second RAN device, the first message used to page the terminal device, where the first message includes the first identifier of the terminal device and instruction information for instructing to perform load balancing.

In still another example, the first RAN device needs to enable the terminal device to perform the RNA update. For example, the terminal device in the inactive mode does not perform the RNA update or does not transmit data within the time that is set by the system. In this case, the first RAN device sends, to the second RAN device, the first message used to page the terminal device, where the first message includes the first identifier of the terminal device and instruction information for instructing the terminal device to perform the RNA update.

Optionally, before step 301, if the first RAN device further receives an eighth message sent by a CN device in step 308, where the eighth message is used to instruct to release the context of the terminal device and includes a cause value (cause) indicating that the terminal device needs to perform a load balancing-based TAU/RAU, the first RAN device needs to instruct the terminal device to perform the TAU/RAU. In this case, the first RAN device sends, to the second RAN device, the first message used to page the terminal device, where the first message further includes the first identifier of the terminal device and instruction information for instructing the terminal device to perform the TAU/RAU, for example, the cause value indicating that the terminal device needs to perform the load balancing-based TAU/RAU. Optionally, the eighth message is a terminal device context release command.

302. The second RAN device sends a second message to the terminal device, where the second message includes the first identifier of the terminal device. The second message is used to page the terminal device. Optionally, the second message is a paging message.

In this example, in step 301, the some or all the RAN devices in the RNA in which the first RAN device is located receive the first message sent by the first RAN device. In this step, the some or all the RAN devices broadcast, in the range of the RNA, the second message used to page the terminal device, and the second message includes the first identifier of the terminal device. In this specification, only the second RAN device that serves as the camped RAN device of the terminal device is used as an example for description. In the actual network, the some or all the RAN devices in the RNA in which the first RAN device is located send the second message.

303. The terminal device sends a third message to the second RAN device, where the third message includes a second identifier of the terminal device. The third message is used to request to resume an RRC connection. Optionally, the third message is an RRC resume request message.

In this example, if the terminal device in the inactive mode receives the second message used for paging, and the second message includes the first identifier of the terminal device, the terminal device determines that a network pages the terminal device. The terminal device sends the third message to the second RAN device, to request to resume the RRC connection, and the third message includes the second identifier of the terminal device. The second identifier of the terminal device is the AS identifier, for example, the resume ID, allocated by the RAN side to the terminal device. The second identifier of the terminal device may uniquely identify the terminal device within the range of the RNA.

304. The second RAN device sends a fourth message to the terminal device, where the fourth message is used to instruct the terminal device to perform state transition.

In an example, the first message that is sent by the first RAN device and that is received by the second RAN device in step 301 includes the instruction information for instructing the terminal device to transit to the idle mode. In this case, the second RAN device sends the fourth message to the terminal device, to instruct the terminal device to transit to the idle mode. Optionally, the fourth message is an RRC connection reject (reject) message or an RRC connection release (release) message.

In another example, the first message that is sent by the first RAN device and that is received by the second RAN device in step 301 includes the instruction information for instructing to perform load balancing. In this case, the second RAN device may further determine, based on a status of the second RAN device, to process the state of the terminal device. For example, when a resource of the second RAN device is limited, the second RAN device may instruct the terminal device to transit to the idle mode; and when the second RAN device has an available resource, the second RAN device may retrieve (retrieve) the context of the terminal device from the first RAN device, and instruct the terminal device to remain in the inactive mode. Optionally, the first RAN device further reconfigures the terminal device based on the context of the terminal device, for example, reconfigures a data bearer of the terminal device, or reallocates the AS identifier of the terminal device. In an implementation, the second RAN device sends the fourth message to the terminal device, to instruct the terminal device to transit to the idle mode. Optionally, the fourth message is an RRC connection reject message or an RRC connection release message. In another implementation, the second RAN device sends the fourth message to the terminal device, to instruct the terminal device to remain in the inactive mode. Optionally, the fourth message is an RRC connection reject message, an RRC connection release message, an RRC connection resume message, an RRC connection reconfiguration (reconfiguration) message, or an RRC connection suspend (suspend) message. If the fourth message is the RRC connection reject message, the RRC connection release message, the RRC connection resume message, or the RRC connection reconfiguration message, the fourth message further includes instruction information for instructing the terminal device to remain in the inactive mode. To implement the manner in which the terminal device is enabled to remain in the inactive mode, the second RAN device needs to retrieve the context of the terminal device from the first RAN device. Therefore, before step 304, the second RAN device further needs to perform step 306, to send a sixth message to the first RAN device, where the sixth message is used to request the context of the terminal device. The sixth message includes the second identifier of the terminal device. Optionally, the sixth message is a terminal device context retrieving request message. The first RAN device sends a seventh message to the second RAN device in step 307, to respond to the sixth message. The seventh message includes the second identifier of the terminal device and the context of the terminal device. Optionally, the seventh message is a terminal device context retrieving response message. Further, the second RAN device further performs step 312 to perform a path switching (path switch) procedure, to switch a path between the RAN side and the CN side of the terminal device from a path that is from the first RAN device to the CN device to a path that is from the second RAN device to the CN device.

In still another example, the first message that is sent by the first RAN device and that is received by the second RAN device in step 301 includes the instruction information for instructing the terminal device to perform the RNA update. In this case, the second RAN device retrieves the context of the terminal device from the first RAN device by using step 306 and step 307, and further sends the fourth message to the terminal device, to instruct the terminal device to remain in the inactive mode. Optionally, the first RAN device further reconfigures the terminal device based on the context of the terminal device, for example, reconfigures a data bearer of the terminal device, or reallocates the AS identifier of the terminal device. In addition, the second RAN device further performs step 312 to perform a path switching (path switch) procedure, to switch a path between the RAN side and the CN side of the terminal device from a path that is from the first RAN device to the CN device to a path that is from the second RAN device to the CN device.

Further, if the first message that is sent by the first RAN device and that is received by the second RAN device in step 301 includes the instruction information for instructing the terminal device to perform the TAU/RAU, the second RAN device sends the fourth message to the terminal device, to instruct the terminal device to transit to the idle mode or the connected mode and perform the TAU/RAU. Optionally, the fourth message is an RRC connection reject message, an RRC connection release message, an RRC connection resume message, an RRC connection setup (setup) message, or an RRC connection reconfiguration message, and the fourth message further includes the instruction information for instructing the terminal device to perform the TAU/RAU, for example, instructing the terminal device to perform the load balancing-based TAU/RAU. After receiving the fourth message, the terminal device performs step 309 to perform a TAU/RAU process with the CN device. It should be understood that, if the second RAN device instructs the terminal device to transit to the connected mode and perform the TAU/RAU, the second RAN device further needs to perform steps 306 and 307 to obtain the context of the terminal device, and may perform step 312 to perform the path switching (path switch) procedure, to switch the path between the RAN side and the CN side of the terminal device from the path that is from the first RAN device to the CN device to the path that is from the second RAN device to the CN device. Optionally, the first RAN device further reconfigures the terminal device based on the context of the terminal device, for example, reconfigures the data bearer of the terminal device, or reallocates the AS identifier of the terminal device.

In the foregoing examples of this implementation, the first RAN device needs to release the context of the terminal device. In an implementation, after sending the first message to the second RAN device in step 301, the first RAN device can release the context of the terminal device in the first RAN device. In another implementation, after sending the seventh message to the second RAN device in step 307, the first RAN device can release the context of the terminal device in the first RAN device. In still another implementation, after retrieving the context of the terminal device from the first RAN device, the second RAN device may perform step 305, to send a fifth message to the first RAN device, where the fifth message is used to instruct the first RAN device to release the context of the terminal device. After receiving the fifth message, the first RAN device releases the context of the terminal device in the first RAN device. Optionally, the fifth message is a terminal device context release message.

Optionally, if the first message that is sent by the first RAN device and that is received by the second RAN device in step 301 includes the instruction information for instructing the terminal device to transit to the idle mode, the second RAN device may further obtain the context of the terminal device by using steps 306 and 307, and send the fourth message to the terminal device in step 304 to transit the state of the terminal device to the connected mode. The fourth message may be the RRC connection resume message, the RRC connection setup message, or the RRC connection reconfiguration message. Optionally, the first RAN device further reconfigures the terminal device based on the context of the terminal device, for example, reconfigures the data bearer of the terminal device, or reallocates the AS identifier of the terminal device. Optionally, the second RAN device further performs step 312 to perform the path switching (path switch) procedure, to switch the path between the RAN side and the CN side of the terminal device from the path that is from the first RAN device to the CN device to the path that is from the second RAN device to the CN device. The terminal device sends a tenth message to the second RAN device in step 310, where the tenth message is used to indicate that the terminal device completes transition to the connected mode. The tenth message may be an RRC connection resume complete message or an RRC connection reconfiguration complete message. After receiving the tenth message, the second RAN device sends an eleventh message to the terminal device in step 311, to instruct the terminal device to transit to the idle mode. The eleventh message may be the RRC connection reject message or the RRC connection release message.

According to the foregoing steps in this example, state transition and context processing are effectively implemented when the terminal device in the inactive mode moves into a cell controlled by a non-anchor RAN device. In addition, the camped RAN device of the terminal device may independently determine context processing and corresponding state transition for the terminal device according to the instruction information of the anchor RAN device and a resource status of the camped RAN device. In this way, a network resource is more effectively used, a communication delay generated when the terminal device performs communication again is reduced, and network signaling overheads are reduced.

FIG. 4 is a schematic flowchart of a context processing method for a terminal device according to an example. The method 400 may be applied to the process of state transition of the terminal device shown in FIG. 2. The procedure in FIG. 4 is applied to a case in which an anchor RAN device needs to release a context of a terminal device in an inactive mode, and the procedure includes the following steps.

401. A first RAN device sends a first message to a second RAN device, where the first message includes a first identifier of the terminal device. The first message is used to instruct the second RAN device to page the terminal device. The first RAN device is a RAN device, for example, an anchor RAN device, storing a connection between a RAN side of the terminal device in the inactive mode and a control plane of a CN side of the terminal device. The first RAN device stores a context of the terminal device. The second RAN device is a camped RAN device of the terminal device. Optionally, the first message is a paging message.

In this example, the first RAN device determines to release the context of the terminal device in the inactive mode. This may be because the terminal device does not transmit data within a period of time that is set by a system, or may be because load of the first RAN device is excessively high, and so on. In this case, the first RAN device may release the context of the terminal device and transit a state of the terminal device to the idle mode, or transfer the context of the terminal device to another RAN device and keep the terminal device in the inactive mode, and so on. Therefore, the first RAN device sends the first message to the second RAN device, to instruct the second RAN device to page the terminal device. It should be understood that the first RAN device may send the first message to some or all RAN devices in an RNA in which the first RAN device is located, to page the terminal device in a range of the RNA. In this specification, only the second RAN device that serves as the camped RAN device of the terminal device is used as an example for description. In an actual network, the first RAN device sends the first message to the some or all the RAN devices in the RNA in which the first RAN device is located.

Optionally, before step 401, if the first RAN device further receives an eighth message sent by a CN device in step 408, where the eighth message is used to instruct to release the context of the terminal device and includes a cause value (cause) indicating that the terminal device needs to perform a load balancing-based TAU/RAU, the first RAN device needs to instruct the terminal device to perform the TAU/RAU. In this case, the first RAN device sends, to the second RAN device, the first message used to page the terminal device, where the first message further includes the first identifier of the terminal device and instruction information for instructing the terminal device to perform the TAU/RAU, for example, the cause value indicating that the terminal device needs to perform the load balancing-based TAU/RAU. Optionally, the eighth message is a terminal device context release command.

402. The second RAN device sends a second message to the terminal device, where the second message includes the first identifier of the terminal device. The second message is used to page the terminal device. Optionally, the second message is a paging message.

In this example, in step 401, the some or all the RAN devices in the RNA in which the first RAN device is located receive the first message sent by the first RAN device. In this step, the some or all the RAN devices broadcast, in the range of the RNA, the second message used to page the terminal device, and the second message includes the first identifier of the terminal device. In this specification, only the second RAN device that serves as the camped RAN device of the terminal device is used as an example for description. In the actual network, the some or all the RAN devices in the RNA in which the first RAN device is located send the second message.

403. The terminal device sends a third message to the second RAN device, where the third message includes a second identifier of the terminal device. The third message is used to request to resume an RRC connection. Optionally, the third message is an RRC resume request message.

In this example, if the terminal device in the inactive mode receives the second message used for paging, and the second message includes the first identifier of the terminal device, the terminal device determines that a network pages the terminal device. The terminal device sends the third message to the second RAN device, to request to resume the RRC connection, and the third message includes the second identifier of the terminal device. The second identifier of the terminal device is an AS identifier, for example, a resume ID, allocated by the RAN side to the terminal device. The second identifier of the terminal device may uniquely identify the terminal device within the range of the RNA.

404. The second RAN device sends a sixth message to the first RAN device, where the sixth message includes the second identifier of the terminal device. The sixth message is used to request the context of the terminal device. Optionally, the sixth message is a terminal device context retrieving request message.

405. The first RAN device sends a seventh message to the second RAN device, where the seventh message includes the second identifier of the terminal device, the context of the terminal device, and an instruction of releasing the context of the terminal device. Specifically, the instruction of releasing the context of the terminal device may be at least one of the following: instructing the terminal device to transit to the idle mode, instructing to perform load balancing, instructing the terminal device to perform an RNA update, or instructing the terminal device to perform the TAU/RAU. The seventh message is used to respond to a request for retrieving the context of the terminal device. Optionally, the seventh message is a terminal device context retrieving response message.

In an example, the first RAN device needs to transit the terminal device from the inactive mode to the idle mode. In this case, the first RAN device sends, to the second RAN device, the seventh message used to respond to the sixth message, where the seventh message includes the second identifier of the terminal device, the context of the terminal device, and instruction information for instructing the terminal device to transit to the idle mode.

In another example, the first RAN device needs to perform load balancing. For example, when the load of the first RAN device is excessively high, the first RAN device needs to reduce the load of the first RAN device, so that the first RAN device releases the context of the terminal device in the inactive mode. In this case, the first RAN device sends, to the second RAN device, the seventh message used to respond to the sixth message, where the seventh message includes the second identifier of the terminal device, the context of the terminal device, and instruction information for instructing to perform load balancing.

In still another example, the first RAN device needs to enable the terminal device to perform the RNA update. For example, the terminal device in the inactive mode does not perform the RNA update or does not transmit data within the time that is set by the system. In this case, the first RAN device sends, to the second RAN device, the seventh message used to respond to the sixth message, where the seventh message includes the second identifier of the terminal device, the context of the terminal device, and instruction information for instructing the terminal device to perform the RNA update.

Optionally, before step 401, if the first RAN device further receives the eighth message sent by the CN device in step 408, where the eighth message is used to instruct to release the context of the terminal device and includes the cause value (cause) indicating that the terminal device needs to perform the load balancing-based TAU/RAU, the first RAN device needs to instruct the terminal device to perform the TAU/RAU. In this case, the first RAN device sends, to the second RAN device, the seventh message used to respond to the sixth message, where the seventh message further includes the second identifier information of the terminal device, the context of the terminal device, and the instruction information for instructing the terminal device to perform the TAU/RAU, for example, the cause value indicating that the terminal device needs to perform the load balancing-based TAU/RAU.

406. The second RAN device sends a fourth message to the terminal device, where the fourth message is used to instruct the terminal device to perform state transition.

In an example, the seventh message that is sent by the first RAN device and that is received by the second RAN device in step 405 includes the instruction information for instructing the terminal device to transit to the idle mode. In this case, the second RAN device sends the fourth message to the terminal device, to instruct the terminal device to transit to the idle mode. Optionally, the fourth message is an RRC connection reject message or an RRC connection release message.

In another example, the seventh message that is sent by the first RAN device and that is received by the second RAN device in step 405 includes the instruction information for instructing to perform load balancing. In this case, the second RAN device may further determine, based on a status of the second RAN device, to process the state of the terminal device. For example, when a resource of the second RAN device is limited, the second RAN device may instruct the terminal device to transit to the idle mode; and when the second RAN device has an available resource, the second RAN device may instruct the terminal device to remain in the inactive mode. Optionally, the first RAN device further reconfigures the terminal device based on the context of the terminal device, for example, reconfigures a data bearer of the terminal device, or reallocates the AS identifier of the terminal device. In an implementation, the second RAN device sends the fourth message to the terminal device, to instruct the terminal device to transit to the idle mode. Optionally, the fourth message is an RRC connection reject message or an RRC connection release message. In another implementation, the second RAN device sends the fourth message to the terminal device, to instruct the terminal device to remain in the inactive mode. Optionally, the fourth message is an RRC connection reject message, an RRC connection release message, an RRC connection resume message, an RRC connection reconfiguration message, or an RRC connection suspend message. If the fourth message is the RRC connection reject message, the RRC connection release message, the RRC connection resume message, or the RRC connection reconfiguration message, the fourth message further includes instruction information for instructing the terminal device to remain in the inactive mode. To implement the manner in which the terminal device is enabled to remain in the inactive mode, the second RAN device further performs step 412 to perform a path switching (path switch) procedure, to switch a path between the RAN side and the CN side of the terminal device from a path that is from the first RAN device to the CN device to a path that is from the second RAN device to the CN device.

In still another example, the seventh message that is sent by the first RAN device and that is received by the second RAN device in step 405 includes the instruction information for instructing the terminal device to perform the RNA update. In this case, the second RAN device sends the fourth message to the terminal device, to instruct the terminal device to remain in the inactive mode. Optionally, the first RAN device further reconfigures the terminal device based on the context of the terminal device, for example, reconfigures a data bearer of the terminal device, or reallocates the AS identifier of the terminal device. In addition, the second RAN device further performs step 412 to perform a path switching (path switch) procedure, to switch a path between the RAN side and the CN side of the terminal device from a path that is from the first RAN device to the CN device to a path that is from the second RAN device to the CN device.

Further, if the seventh message that is sent by the first RAN device and that is received by the second RAN device in step 405 includes the instruction information for instructing the terminal device to perform the TAU/RAU, the second RAN device sends the fourth message to the terminal device, to instruct the terminal device to transit to the idle mode or the connected mode and perform the TAU/RAU. Optionally, the fourth message is an RRC connection reject message, an RRC connection release message, an RRC connection resume message, an RRC connection setup message, or an RRC connection reconfiguration message, and the fourth message further includes the instruction information for instructing the terminal device to perform the TAU/RAU. After receiving the fourth message, the terminal device performs step 409 to perform a TAU/RAU process with the CN device. It should be understood that, if the second RAN device instructs the terminal device to transit to the connected mode and perform the TAU/RAU, the second RAN device may further perform step 412 to perform the path switching (path switch) procedure, to switch the path between the RAN side and the CN side of the terminal device from the path that is from the first RAN device to the CN device to the path that is from the second RAN device to the CN device. Optionally, the first RAN device further reconfigures the terminal device based on the context of the terminal device, for example, reconfigures the data bearer of the terminal device, or reallocates the AS identifier of the terminal device.

In the foregoing examples of this example, the first RAN device needs to release the context of the terminal device. In an implementation, after sending the seventh message to the second RAN device in step 405, the first RAN device can release the context of the terminal device in the first RAN device. In another implementation, after retrieving the context of the terminal device from the first RAN device, the second RAN device may perform step 407, to send a fifth message to the first RAN device, where the fifth message is used to instruct the first RAN device to release the context of the terminal device. After receiving the fifth message, the first RAN device releases the context of the terminal device in the first RAN device. Optionally, the fifth message is a terminal device context release message.

Optionally, if the seventh message that is sent by the first RAN device and that is received by the second RAN device in step 405 includes the instruction information for instructing the terminal device to transit to the idle mode, the second RAN device may further send the fourth message to the terminal device in step 406 to transit the state of the terminal device to the connected mode. The fourth message may be the RRC connection resume message, the RRC connection setup message, or the RRC connection reconfiguration message. Optionally, the first RAN device further reconfigures the terminal device based on the context of the terminal device, for example, reconfigures the data bearer of the terminal device, or reallocates the AS identifier of the terminal device. Optionally, the second RAN device further performs step 412 to perform the path switching (path switch) procedure, to switch the path between the RAN side and the CN side of the terminal device from the path that is from the first RAN device to the CN device to the path that is from the second RAN device to the CN device. The terminal device sends a tenth message to the second RAN device in step 410, where the tenth message is used to indicate that the terminal device completes transition to the connected mode. The tenth message may be an RRC connection resume complete message or an RRC connection reconfiguration complete message. After receiving the tenth message, the second RAN device sends an eleventh message to the terminal device in step 411, to instruct the terminal device to transit to the idle mode. The eleventh message may be the RRC connection reject message or the RRC connection release message.

According to the foregoing steps in this example, state transition and context processing are effectively implemented when the terminal device in the inactive mode moves into a cell controlled by a non-anchor RAN device. In addition, the camped RAN device of the terminal device may independently determine context processing and corresponding state transition for the terminal device according to the instruction information of the anchor RAN device and a resource status of the camped RAN device. In this way, a network resource is more effectively used, a communication delay generated when the terminal device performs communication again is reduced, and network signaling overheads are reduced. Further, the camped RAN device obtains instruction information of the anchor RAN device from a context retrieving response of the terminal device, so that the anchor RAN device is prevented from sending the instruction information to a plurality of RAN devices in a message used to instruct to page the terminal device, and the network signaling overheads are further reduced.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedures or functions according to the embodiments of this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive solid state disk (SSD)), or the like. A person skilled in the art may use different methods to implement the described functions for each particular application, but it should not be considered that the implementation goes beyond the scope of this patent application.

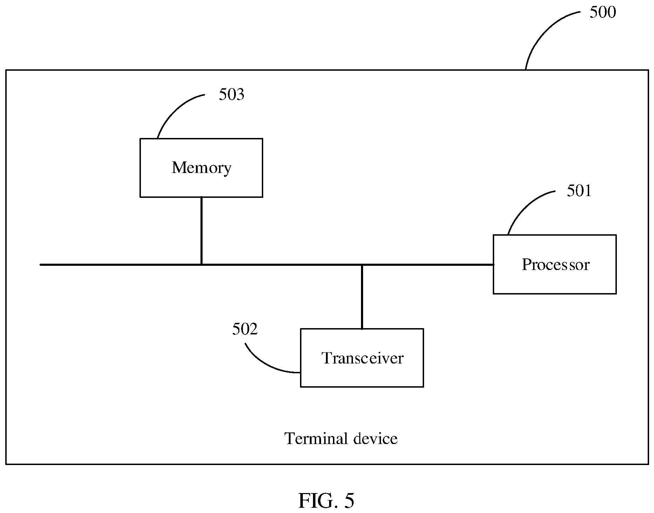

The foregoing describes in detail the method examples with reference to FIG. 3 and FIG. 4, and the following describes in detail apparatus examples with reference to FIG. 5 to FIG. 8. It should be understood that the apparatus examples and the method examples correspond to each other. For similar descriptions, refer to the method examples. It should be noted that the apparatus examples may be used in conjunction with the foregoing methods, or may be independently used.

FIG. 5 is a schematic block diagram of a terminal device 500 according to an example. The terminal device 500 may correspond to (for example, may be configured on or may be) the terminal device described in the method 300 or the terminal device described in the method 400. The terminal device 500 may include a processor 501 and a transceiver 502, and the processor 501 is communicatively connected to the transceiver 502. Optionally, the terminal device 500 further includes a memory 503, and the memory 503 is communicatively connected to the processor 501. Optionally, the processor 501, the memory 503, and the transceiver 502 may be communicatively connected, the memory 503 may be configured to store an instruction, and the processor 501 is configured to execute the instruction stored in the memory 503, to control the transceiver 502 to send information or a signal. The processor 501 and the transceiver 502 are separately configured to perform the actions or the processing processes performed by the terminal device in the method 300 or the terminal device in the method 400. Herein, to avoid repetition, detailed descriptions are omitted.

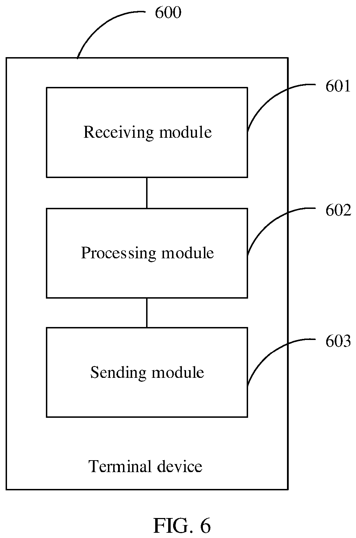

FIG. 6 is another schematic block diagram of a terminal device 600 according to an example. The terminal device 600 may correspond to (for example, may be configured on or may be) the terminal device described in the method 300 or the terminal device described in the method 400. The terminal device 600 may include a receiving module 601, a processing module 602, and a sending module 603, and the processing module 602 is communicatively connected to the receiving module 601 and the sending module 603. The modules or units in the terminal device 600 are separately configured to perform the actions or the processing processes performed by the terminal device in the method 300 or the terminal device in the method 400. Herein, to avoid repetition, detailed descriptions are omitted.

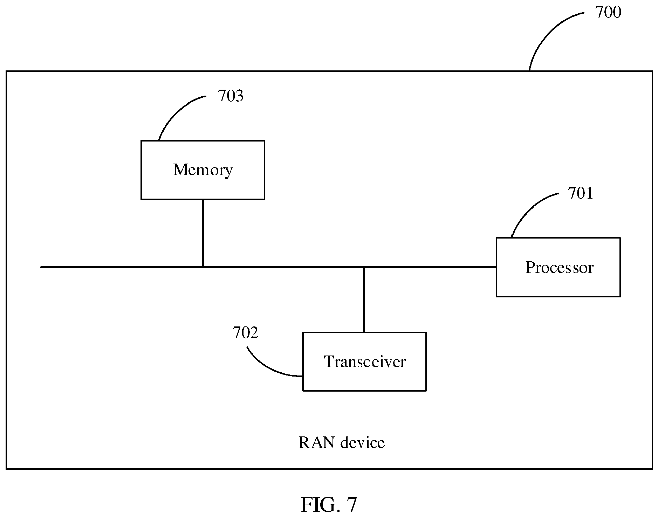

FIG. 7 is a schematic block diagram of a RAN device 700 according to an example. The RAN device 700 may correspond to (for example, may be configured on or may be) the RAN device described in the method 300 or the RAN device described in the method 400. The RAN device 700 may include a processor 701 and a transceiver 702, and the processor 701 is communicatively connected to the transceiver 702. Optionally, the RAN device 700 further includes a memory 703, and the memory 703 is communicatively connected to the processor 701. Optionally, the processor 701, the memory 703, and the transceiver 702 may be communicatively connected, the memory 703 may be configured to store an instruction, and the processor 701 is configured to execute the instruction stored in the memory 703, to control the transceiver 702 to send information or a signal. The processor 701 and the transceiver 702 are separately configured to perform the actions or the processing processes performed by the RAN device in the method 300 or the RAN device in the method 400. Herein, to avoid repetition, detailed descriptions are omitted.

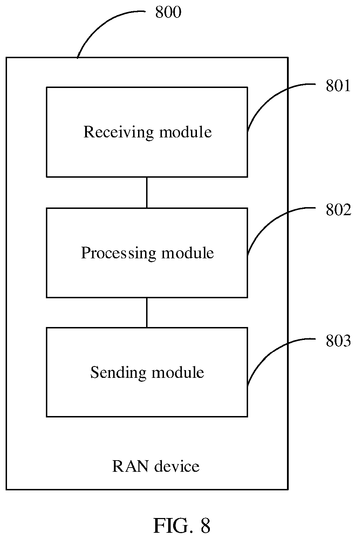

FIG. 8 is another schematic block diagram of a RAN device 800 according to an example. The RAN device 800 may correspond to (for example, may be configured on or may be) the RAN device described in the method 300 or the RAN device described in the method 400. The RAN device 800 may include a receiving module 801, a processing module 802, and a sending module 803, and the processing module 802 is communicatively connected to the receiving module 801 and the sending module 803. The modules or units in the RAN device 800 are separately configured to perform the actions or the processing processes performed by the RAN device in the method 300 or the RAN device in the method 400. Herein, to avoid repetition, detailed descriptions are omitted.

It should be understood that the processors (501 and 701) in the apparatus examples of this application may be central processing units (central processing unit, CPU for short), network processors (network processor, NP for short), hardware chips, or any combination thereof. The hardware chip may be an application-specific integrated circuit (application-specific integrated circuit, ASIC for short), a programmable logic device (programmable logic device, PLD for short), or a combination thereof. The PLD may be a complex programmable logic device (complex programmable logic device, CPLD for short), a field programmable gate array (field-programmable gate array, FPGA for short), a generic array logic (generic array logic, GAL for short), or any combination thereof.

The memories (503 and 703) in the apparatus examples of this application may be volatile memories (volatile memory), for example, random access memories (random-access memory, RAM for short); or may be non-volatile memories (non-volatile memory), for example, read-only memories (read-only memory, ROM for short), flash memories (flash memory), hard disk drives (hard disk drive, HDD for short), or solid-state drives (solid-state drive, SSD for short); or may be a combination of the foregoing types of memories.

In the several embodiments provided in this application, it should be understood that the disclosed apparatus and method may be implemented in other manners. For example, the described apparatus examples are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this patent application may be integrated into one processing unit, or each of the units may exist alone physically, or two or more units are integrated into one unit.

When functions are implemented in a form of a software functional unit and sold or used as an independent product, the functions may be stored in a computer-readable storage medium. Based on such an understanding, the technical solutions of this patent application essentially, or the part contributing to the prior art, or some of the technical solutions may be implemented in a form of a software product. The computer software product is stored in a storage medium, and includes several instructions for enabling a computer device (which may be a personal computer, a server, a network device, or the like) to perform all or some of the steps of the methods described in the embodiments of this patent application. The foregoing storage medium includes any medium that can store program code, such as a USB flash drive, a removable hard disk, a read-only memory (ROM, read-only memory for short), a random access memory (RAM, random access memory for short), a magnetic disk, or an optical disc.

## Claims

1. A communications method (300) comprising:
receiving (301) by a second radio access network, RAN, device (122, 800), a first message sent by a first RAN device (121), wherein the first message comprises a first identifier of a terminal device (130), wherein the terminal device (130) is in an inactive state, wherein the first RAN device (121) is an anchor RAN device that stores a context of the terminal device (130) and maintains a connection between a RAN side of the terminal device (130) and a control plane of a core network, CN, side of the terminal device (130), and wherein the second RAN device (122, 800) is a camped RAN device of the terminal device (130) and does not have the context of the terminal device (130);
sending (302) by the second RAN device (122, 800), a second message to the terminal device (130), wherein the second message comprises the first identifier of the terminal device (130), and the second message is used to page the terminal device (130);
receiving (303), by the second RAN device (122, 800), a third message sent by the terminal device (130), wherein the third message comprises a second identifier of the terminal device (130), and the third message is used to request to resume a radio resource control, RRC, connection; and
sending (304), by the second RAN device (122, 800), a fourth message to the terminal device (130) according to instruction information for releasing the context of the terminal device (130), wherein the fourth message is used to instruct the terminal device (130) to perform state transition;
**characterized in that** the first message further comprises the instruction information for releasing the context of the terminal device (130), wherein the instruction information for releasing the context of the terminal device (130) comprises at least one of the following: instructing the terminal device (130) to transit to an idle mode, instructing to perform load balancing, instructing the terminal device (130) to perform a RAN based notification area, RNA, update, or instructing the terminal device (130) to perform a tracking area update, TAU, or a registration area update, RAU; and
the first identifier of the terminal device (130) is a non-access stratum identifier allocated by the CN side to the terminal device (130) and the second identifier of the terminal device (130) is an access stratum identifier allocated by the RAN side to the terminal device (130).

2. The communications method (300) according to claim 1, further comprising, when the instruction information for releasing the context of the terminal device comprises instructing the terminal device to transit to an idle mode:
receiving (310), by the second RAN device (122, 800), a message that is sent by the terminal device (130) and that is used to indicate that transition to the connected mode is completed; and
sending (311), by the second RAN device (122, 800), a message used to instruct the terminal device (130) to transit to the idle mode.

3. The method (300) according to claim 1, further comprising,
wherein, when the instruction information for releasing the context of the terminal device comprises at least one of instructing to perform load balancing, instructing the terminal device to perform an RNA update, or instructing the terminal device to perform a TAU or RAU,
after retrieving, by the second RAN device, the context of the terminal device from the first RAN device, sending (305), by the second RAN device (122, 800), a fifth message to the first RAN device (121), wherein the fifth message is used to instruct the first RAN device (121) to release the context of the terminal device (130).

4. The method (300) according to claim 1, further comprising, when the instruction information for releasing the context of the terminal device comprises at least one of instructing to perform load balancing, instructing the terminal device to perform an RNA update, or instructing the terminal device to perform a TAU or RAU,
sending (306), by the second RAN device (122, 800), a sixth message to the first RAN device (121), wherein the sixth message comprises the second identifier of the terminal device (130), and the sixth message is used to request the context of the terminal device (130); and
receiving (307), by the second RAN device (122, 800), a seventh message sent by the first RAN device (121), wherein the seventh message comprises the second identifier of the terminal device (130) and the context of the terminal device (130), and the seventh message is a response message of the sixth message.

5. A communications device (122, 800), comprising:
a receiving module (801), configured to: receive a first message sent by a first radio access network, RAN, device (121), wherein the first message comprises a first identifier of a terminal device (130), wherein the terminal device (130) is in an inactive state, wherein the first RAN device (121) is an anchor RAN device that stores a context of the terminal device (130) and maintains a connection between a RAN side of the terminal device (130) and a control plane of a core network, CN, side of the terminal device (130), and wherein the communications device (122, 800) is a camped RAN device of the terminal device (130) and does not have the context of the terminal device (130); and receive a third message sent by the terminal device (130), wherein the third message comprises a second identifier of the terminal device (130), and the third message is used to request to resume a radio resource control, RRC, connection;
a processing module (802), configured to determine, according to instruction information for releasing the context of the terminal device (130), to perform state transition on the terminal device (130); and
a sending module (803), configured to: send a second message to the terminal device (130), wherein the second message comprises the first identifier of the terminal device (130), and the second message is used to page the terminal device (130); and send a fourth message to the terminal device (130) according to the instruction information for releasing the context of the terminal device (130), wherein the fourth message is used to instruct the terminal device (130) to perform state transition;
**characterized in that** the first message further comprises the instruction information for releasing the context of the terminal device (130), wherein the instruction information for releasing the context of the terminal device (130) comprises at least one of the following: instructing the terminal device (130) to transit to an idle mode, instructing to perform load balancing, instructing the terminal device (130) to perform a RAN based notification area, RNA, update, or instructing the terminal device (130) to perform a tracking area update, TAU, or a registration area update, RAU; and
the first identifier of the terminal device (130) is a non-access stratum identifier allocated by the CN side to the terminal device (130) and the second identifier of the terminal device (130) is an access stratum identifier allocated by the RAN side to the terminal device (130).

6. The communications device (122, 800) according to claim 5, wherein, when the instruction information for releasing the context of the terminal device comprises instructing the terminal device to transit to an idle mode,
the receiving module (801) is further configured to receive a message that is sent by the terminal device (130) and that is used to indicate that transition to the connected mode is completed; and
the sending module (803) is further configured to send a message used to instruct the terminal device (130) to transit to the idle mode.

7. The communications device (122, 800) according to claim 5, wherein, when the instruction information for releasing the context of the terminal device comprises at least one of instructing to perform load balancing, instructing the terminal device to perform an RNA update, or instructing the terminal device to perform a TAU or RAU,
the communications device is configured to retrieve the context of the terminal device from the first RAN device and then
the sending module (803) is further configured to send a fifth message to the first RAN device (121), wherein the fifth message is used to instruct the first RAN device (121) to release the context of the terminal device (130).

8. The communications device (122, 800) according to claim 5, wherein wherein, when the instruction information for releasing the context of the terminal device comprises at least one of instructing to perform load balancing, instructing the terminal device to perform an RNA update, or instructing the terminal device to perform a TAU or RAU,
the sending module (803) is further configured to send a sixth message to the first RAN device (121), wherein the sixth message comprises the second identifier of the terminal device (130), and the sixth message is used to request the context of the terminal device (130); and
the receiving module (801) is further configured to receive a seventh message sent by the first RAN device (121), wherein the seventh message comprises the second identifier of the terminal device (130) and the context of the terminal device (130), and the seventh message is a response message of the sixth message.

9. The communications method (300) according to claim 1 or the communications device (122, 800) according to claim 5, wherein the instruction information is used to instruct the terminal device (130) to transit to an idle mode, and the fourth message is used to instruct the terminal device (130) to transit to the idle mode.

10. The communications method according (300) to claim 1 or the communications device (122, 800) according to claim 5, wherein the state transition comprises at least one of the following operations performed on the terminal device (130): transition from an inactive mode to an idle mode, transition from an inactive mode to an inactive mode, transition from an inactive mode to a connected mode, or transition from an inactive mode to a connected mode and then to an idle mode.

11. The communications method (300) according to claim 1 or the communications device (122, 800) according to claim 5, wherein that the fourth message is used to instruct the terminal device (130) to perform state transition is specifically:
when the first message comprises instruction information for instructing to perform load balancing, the fourth message is used to instruct the terminal device (130) to transit to an idle mode or remain in an inactive mode;
when the first message comprises instruction information for instructing the terminal device (130) to perform an RNA update, the fourth message is used to instruct the terminal device (130) to remain in an inactive mode; or
when the first message comprises instruction information for instructing the terminal device (130) to perform a TAU/RAU, the fourth message is used to instruct the terminal device (130) to transit to an idle mode or a connected mode.

12. The communications method (300) according to claim 1 or the communications device (122, 800) according to claim 5, wherein the context of the terminal device (130) comprises any one of the following: a security context of the terminal device (130), an aggregate maximum bit rate of the terminal device (130), or information about a current session of the terminal device (130).

13. A computer-readable storage medium, comprising an instruction, wherein when the instruction is run on a communications device (122, 800), the communications device (122, 800) is enabled to perform the method (300) according to any one of claims 1 to 4 or 9 to 12.

## Patentansprüche

1. Kommunikationsverfahren (300), umfassend:
Empfangen (301), durch eine zweite Funkzugangsnetzvorrichtung, RAN-Vorrichtung (122, 800), einer ersten Nachricht, die von einer ersten RAN-Vorrichtung (121) gesendet wird, wobei die erste Nachricht eine erste Kennung einer Endvorrichtung (130) umfasst, wobei die Endvorrichtung (130) in einem inaktiven Zustand ist, wobei die erste RAN-Vorrichtung (121) eine Anker-RAN-Vorrichtung ist, die einen Kontext der Endvorrichtung (130) speichert und eine Verbindung zwischen einer RAN-Seite der Endvorrichtung (130) und einer Steuerebene einer Kernnetzwerkseite, CN-Seite, der Endvorrichtung (130) aufrechterhält, und wobei die zweite RAN-Vorrichtung (122, 800) eine gecampte RAN-Vorrichtung der Endvorrichtung (130) ist und nicht den Kontext der Endvorrichtung (130) aufweist;
Senden (302), durch die zweite RAN-Vorrichtung (122, 800), einer zweiten Nachricht an die Endvorrichtung (130), wobei die zweite Nachricht die erste Kennung der Endvorrichtung (130) umfasst und die zweite Nachricht zum Pagen der Endvorrichtung (130) verwendet wird;
Empfangen (303), durch die zweite RAN-Vorrichtung (122, 800), einer dritten Nachricht, die von der Endvorrichtung (130) gesendet wird, wobei die dritte Nachricht eine zweite Kennung der Endvorrichtung (130) umfasst und die dritte Nachricht verwendet wird, um eine Wiederaufnahme einer Funkressourcensteuerungsverbindung, RRC-Verbindung, anzufordern; und
Senden (304), durch die zweite RAN-Vorrichtung (122, 800), einer vierten Nachricht an die Endvorrichtung (130) gemäß Anweisungsinformationen zum Freigeben des Kontextes der Endvorrichtung (130), wobei die vierte Nachricht verwendet wird, um die Endvorrichtung (130) anzuweisen, einen Zustandsübergang durchzuführen;
**dadurch gekennzeichnet, dass** die erste Nachricht ferner die Anweisungsinformationen zum Freigeben des Kontextes der Endvorrichtung (130) umfasst, wobei die Anweisungsinformationen zum Freigeben des Kontextes der Endvorrichtung (130) mindestens eines der Folgenden umfassen: Anweisen der Endvorrichtung (130) zum Übergehen in einen Ruhemodus, Anweisen zum Durchführen eines Lastausgleichs, Anweisen der Endvorrichtung (130) zum Durchführen einer RAN-basierten Benachrichtigungsbereichsaktualisierung, RNA-Aktualisierung oder Anweisen der Endvorrichtung (130) zum Durchführen einer Nachverfolgungsbereichsaktualisierung, TAU, oder einer Registrierungsbereichsaktualisierung, RAU; und
die erste Kennung der Endvorrichtung (130) eine Non-Access-Stratum-Kennung ist, die von der CN-Seite der Endvorrichtung (130) zugewiesen ist, und die zweite Kennung der Endvorrichtung (130) eine Access-Stratum-Kennung ist, die von der RAN-Seite der Endvorrichtung (130) zugewiesen ist.

2. Kommunikationsverfahren (300) nach Anspruch 1, ferner umfassend, wenn die Anweisungsinformationen zum Freigeben des Kontextes der Endvorrichtung Anweisen der Endvorrichtung zum Übergang in einen Ruhemodus umfassen:
Empfangen (310), durch die zweite RAN-Vorrichtung (122, 800), einer Nachricht, die von der Endvorrichtung (130) gesendet wird und die verwendet wird, um anzugeben, dass der Übergang in den verbundenen Modus abgeschlossen ist; und
Senden (311), durch die zweite RAN-Vorrichtung (122, 800), einer Nachricht, die verwendet wird, um die Endvorrichtung (130) anzuweisen, in den Ruhemodus überzugehen.

3. Verfahren (300) nach Anspruch 1, ferner umfassend, wobei, wenn die Anweisungsinformationen zum Freigeben des Kontextes der Endvorrichtung mindestens eines von Anweisen zum Durchführen eines Lastausgleichs, Anweisen der Endvorrichtung zum Durchführen einer RNA-Aktualisierung oder Anweisen der Endvorrichtung zum Durchführen einer TAU oder RAU umfassen, nach dem Abrufen, durch die zweite RAN-Vorrichtung, des Kontextes der Endvorrichtung von der ersten RAN-Vorrichtung,
Senden (305), durch die zweite RAN-Vorrichtung (122, 800), einer fünften Nachricht an die erste RAN-Vorrichtung (121), wobei die fünfte Nachricht verwendet wird, um die erste RAN-Vorrichtung (121) anzuweisen, den Kontext der Endvorrichtung (130) freizugeben.

4. Verfahren (300) nach Anspruch 1, ferner umfassend, wenn die Anweisungsinformationen zum Freigeben des Kontextes der Endvorrichtung mindestens eines von Anweisen zum Durchführen eines Lastausgleichs, Anweisen der Endvorrichtung zum Durchführen einer RNA-Aktualisierung oder Anweisen der Endvorrichtung zum Durchführen einer TAU oder RAU umfassen, Senden (306), durch die zweite RAN-Vorrichtung (122, 800), einer sechsten Nachricht an die erste RAN-Vorrichtung (121), wobei die sechste Nachricht die zweite Kennung der Endvorrichtung (130) umfasst und die sechste Nachricht verwendet wird, um den Kontext der Endvorrichtung (130) anzufordern; und
Empfangen (307), durch die zweite RAN-Vorrichtung (122, 800), einer siebten Nachricht, die von der ersten RAN-Vorrichtung (121) gesendet wird, wobei die siebte Nachricht die zweite Kennung der Endvorrichtung (130) und den Kontext der Endvorrichtung (130) umfasst und die siebte Nachricht eine Antwortnachricht der sechsten Nachricht ist.

5. Kommunikationsvorrichtung (122, 800), umfassend:
ein Empfangsmodul (801), das konfiguriert ist zum: Empfangen einer ersten Nachricht, die von einer ersten Funkzugangsnetzvorrichtung, RAN-Vorrichtung (121), gesendet wird, wobei die erste Nachricht eine erste Kennung einer Endvorrichtung (130) umfasst, wobei die Endvorrichtung (130) in einem inaktiven Zustand ist, wobei die erste RAN-Vorrichtung (121) eine Anker-RAN-Vorrichtung ist, die einen Kontext der Endvorrichtung (130) speichert und eine Verbindung zwischen einer RAN-Seite der Endvorrichtung (130) und einer Steuerebene einer Kernnetzwerkseite, CN-Seite, der Endvorrichtung (130) aufrechterhält, und wobei die Kommunikationsvorrichtung (122, 800) eine gecampte RAN-Vorrichtung der Endvorrichtung (130) ist und nicht den Kontext der Endvorrichtung (130) aufweist; und Empfangen einer dritten Nachricht, die von der Endvorrichtung (130) gesendet wird, wobei die dritte Nachricht eine zweite Kennung der Endvorrichtung (130) umfasst und die dritte Nachricht verwendet wird, um eine Wiederaufnahme einer Funkressourcensteuerungsverbindung, RRC-Verbindung, anzufordern;
ein Verarbeitungsmodul (802), das zum Bestimmen, gemäß Anweisungsinformationen zum Freigeben des Kontextes der Endvorrichtung (130), einen Zustandsübergang an der Endvorrichtung (130) durchzuführen, konfiguriert ist; und
ein Sendemodul (803), das konfiguriert ist zum: Senden einer zweiten Nachricht an die Endvorrichtung (130), wobei die zweite Nachricht die erste Kennung der Endvorrichtung (130) umfasst und die zweite Nachricht zum Pagen der Endvorrichtung (130) verwendet wird; und Senden einer vierten Nachricht an die Endvorrichtung (130) gemäß den Anweisungsinformationen zum Freigeben des Kontextes der Endvorrichtung (130), wobei die vierte Nachricht verwendet wird, um die Endvorrichtung (130) anzuweisen, einen Zustandsübergang durchzuführen;
**dadurch gekennzeichnet, dass** die erste Nachricht ferner die Anweisungsinformationen zum Freigeben des Kontextes der Endvorrichtung (130) umfasst, wobei die Anweisungsinformationen zum Freigeben des Kontextes der Endvorrichtung (130) mindestens eines der Folgenden umfassen: Anweisen der Endvorrichtung (130) zum Übergehen in einen Ruhemodus, Anweisen zum Durchführen eines Lastausgleichs, Anweisen der Endvorrichtung (130) zum Durchführen einer RAN-basierten Benachrichtigungsbereichsaktualisierung, RNA-Aktualisierung oder Anweisen der Endvorrichtung (130) zum Durchführen einer Nachverfolgungsbereichsaktualisierung, TAU, oder einer Registrierungsbereichsaktualisierung, RAU; und
die erste Kennung der Endvorrichtung (130) eine Non-Access-Stratum-Kennung ist, die von der CN-Seite der Endvorrichtung (130) zugewiesen ist, und die zweite Kennung der Endvorrichtung (130) eine Access-Stratum-Kennung ist, die von der RAN-Seite der Endvorrichtung (130) zugewiesen ist.

6. Kommunikationsvorrichtung (122, 800) nach Anspruch 5, wobei, wenn die Anweisungsinformationen zum Freigeben des Kontextes der Endvorrichtung Anweisen der Endvorrichtung zum Übergang in einen Ruhemodus umfassen,
das Empfangsmodul (801) ferner zum Empfangen einer Nachricht konfiguriert ist, die von der Endvorrichtung (130) gesendet wird und die verwendet wird, um anzugeben, dass der Übergang in den verbundenen Modus abgeschlossen ist; und
das Sendemodul (803) ferner zum Senden einer Nachricht konfiguriert ist, die verwendet wird, um die Endvorrichtung (130) anzuweisen, in den Ruhemodus überzugehen.

7. Kommunikationsvorrichtung (122, 800) nach Anspruch 5, wobei, wenn die Anweisungsinformationen zum Freigeben des Kontextes der Endvorrichtung mindestens eines von Anweisen zum Durchführen eines Lastausgleichs, Anweisen der Endvorrichtung zum Durchführen einer RNA-Aktualisierung oder Anweisen der Endvorrichtung zum Durchführen einer TAU oder RAU umfassen, die Kommunikationsvorrichtung zum Abrufen des Kontextes der Endvorrichtung von der ersten RAN-Vorrichtung konfiguriert ist und dann
das Sendemodul (803) ferner zum Senden einer fünften Nachricht an die erste RAN-Vorrichtung (121) konfiguriert ist, wobei die fünfte Nachricht verwendet wird, um die erste RAN-Vorrichtung (121) anzuweisen, den Kontext der Endvorrichtung (130) freizugeben.

8. Kommunikationsvorrichtung (122, 800) nach Anspruch 5, wobei wobei, wenn die Anweisungsinformationen zum Freigeben des Kontextes der Endvorrichtung mindestens eines von Anweisen zum Durchführen eines Lastausgleichs, Anweisen der Endvorrichtung zum Durchführen einer RNA-Aktualisierung oder Anweisen der Endvorrichtung zum Durchführen einer TAU oder RAU umfassen,
das Sendemodul (803) ferner zum Senden einer sechsten Nachricht an die erste RAN-Vorrichtung (121) konfiguriert ist, wobei die sechste Nachricht die zweite Kennung der Endvorrichtung (130) umfasst und die sechste Nachricht verwendet wird, um den Kontext der Endvorrichtung (130) anzufordern; und
das Empfangsmodul (801) ferner zum Empfangen einer siebten Nachricht konfiguriert ist, die von der ersten RAN-Vorrichtung (121) gesendet wird, wobei die siebte Nachricht die zweite Kennung der Endvorrichtung (130) und den Kontext der Endvorrichtung (130) umfasst und die siebte Nachricht eine Antwortnachricht der sechsten Nachricht ist.

9. Kommunikationsverfahren (300) nach Anspruch 1 oder Kommunikationsvorrichtung (122, 800) nach Anspruch 5, wobei die Anweisungsinformationen verwendet werden, um die Endvorrichtung (130) anzuweisen, in einen Ruhemodus überzugehen, und die vierte Nachricht verwendet wird, um die Endvorrichtung (130) anzuweisen, in den Ruhemodus überzugehen.

10. Kommunikationsverfahren nach (300) bis Anspruch 1 oder Kommunikationsvorrichtung (122, 800) nach Anspruch 5, wobei der Zustandsübergang mindestens eine der folgenden Operationen umfasst, die auf der Endvorrichtung (130) durchgeführt werden:
Übergang von einem inaktiven Modus in einen Ruhemodus, Übergang von einem inaktiven Modus in einen inaktiven Modus, Übergang von einem inaktiven Modus in einen verbundenen Modus oder Übergang von einem inaktiven Modus in einen verbundenen Modus und dann in einen Ruhemodus.

11. Kommunikationsverfahren (300) nach Anspruch 1 oder Kommunikationsvorrichtung (122, 800) nach Anspruch 5, wobei, dass die vierte Nachricht verwendet wird, um die Endvorrichtung (130) anzuweisen, in den Ruhemodus überzugehen, insbesondere Folgendes bedeutet:
wenn die erste Nachricht Anweisungsinformationen zum Anweisen umfasst, einen Lastausgleich durchzuführen, die vierte Nachricht verwendet wird, um die Endvorrichtung (130) anzuweisen, in einen Ruhemodus überzugehen oder in einem inaktiven Modus zu verbleiben;
wenn die erste Nachricht Anweisungsinformationen zum Anweisen der Endvorrichtung (130) umfasst, eine RNA-Aktualisierung durchzuführen, die vierte Nachricht verwendet wird, um die Endvorrichtung (130) anzuweisen, in einem inaktiven Modus zu verbleiben; oder
wenn die erste Nachricht Anweisungsinformationen zum Anweisen der Endvorrichtung (130) umfasst, eine TAU/RAU durchzuführen, die vierte Nachricht verwendet wird, um die Endvorrichtung (130) anzuweisen, in einen Ruhemodus oder einen verbundenen Modus überzugehen.

12. Kommunikationsverfahren (300) nach Anspruch 1 oder Kommunikationsvorrichtung (122, 800) nach Anspruch 5, wobei der Kontext der Endvorrichtung (130) eines der Folgenden umfasst:
einen Sicherheitskontext der Endvorrichtung (130), eine aggregierte maximale Bitrate der Endvorrichtung (130) oder Informationen über eine aktuelle Sitzung der Endvorrichtung (130) .

13. Computerlesbares Speichermedium, eine Anweisung umfassend, wobei, wenn die Anweisung auf einer Computervorrichtung (122, 800) ausgeführt wird, die Computervorrichtung (122, 800) befähigt wird, das Verfahren (300) nach einem der Ansprüche 1 bis 4 oder 9 bis 12 durchzuführen.

## Revendications

1. Procédé de communication (300) comprenant :
la réception (301) par un second dispositif de réseau d'accès radio, RAN (122, 800), d'un premier message envoyé par un premier dispositif RAN (121), dans lequel le premier message comprend un premier identifiant d'un dispositif terminal (130), dans lequel le dispositif terminal (130) est dans un état inactif, dans lequel le premier dispositif RAN (121) est un dispositif RAN d'ancrage qui stocke un contexte du dispositif terminal (130) et maintient une connexion entre un côté RAN du dispositif terminal (130) et un plan de commande d'un côté de réseau central, CN, du dispositif terminal (130), et dans lequel le second dispositif RAN (122, 800) est un dispositif RAN mis en attente du dispositif terminal (130) et n'a pas le contexte du dispositif terminal (130) ;
l'envoi (302) par le second dispositif RAN (122, 800), d'un deuxième message au dispositif terminal (130), dans lequel le deuxième message comprend le premier identifiant du dispositif terminal (130), et le deuxième message est utilisé pour rechercher le dispositif terminal (130) ;
la réception (303), par le second dispositif RAN (122, 800), d'un troisième message envoyé par le dispositif terminal (130), dans lequel le troisième message comprend un second identifiant du dispositif terminal (130), et le troisième message est utilisé pour demander la reprise d'une connexion de commande de ressource radio, RRC ; et
l'envoi (304), par le second dispositif RAN (122, 800), d'un quatrième message au dispositif terminal (130) selon des informations d'instruction de libération du contexte du dispositif terminal (130), dans lequel le quatrième message est utilisé pour donner une instruction au dispositif terminal (130) d'effectuer une transition d'état ;
**caractérisé en ce que** le premier message comprend en outre les informations d'instruction de libération du contexte du dispositif terminal (130), dans lequel les informations d'instruction de libération du contexte du dispositif terminal (130) comprennent au moins l'un de ce qui suit : donner une instruction au dispositif terminal (130) d'effectuer une transition vers un mode veille, donner une instruction d'effectuer un équilibrage de charge, donner une instruction au dispositif terminal (130) d'effectuer une mise à jour de zone de notification basée sur RAN, RNA, ou donner une instruction au dispositif terminal (130) d'effectuer une mise à jour de zone de suivi, TAU, ou une mise à jour de zone d'enregistrement, RAU ; et
le premier identifiant du dispositif terminal (130) est un identifiant de strate de non-accès attribué par le côté CN au dispositif terminal (130) et le second identifiant du dispositif terminal (130) est un identifiant de strate d'accès attribué par le côté RAN au dispositif terminal (130).

2. Procédé de communication (300) selon la revendication 1, comprenant en outre, lorsque les informations d'instruction de libération du contexte du dispositif terminal comprennent le fait de donner une instruction au dispositif terminal d'effectuer une transition vers un mode veille :
la réception (310), par le second dispositif RAN (122, 800), d'un message qui est envoyé par le dispositif terminal (130) et qui est utilisé pour indiquer que la transition vers le mode connecté est terminée ; et
l'envoi (311), par le second dispositif RAN (122, 800), d'un message utilisé pour donner une instruction au dispositif terminal (130) d'effectuer une transition vers le mode veille.

3. Procédé (300) selon la revendication 1, comprenant en outre, dans lequel, lorsque les informations d'instruction de libération du contexte du dispositif terminal comprennent au moins l'un parmi le fait de donner une instruction d'effectuer un équilibrage de charge, le fait de donner une instruction au dispositif terminal d'effectuer une mise à jour RNA, ou le fait de donner une instruction au dispositif terminal d'effectuer une TAU ou une RAU, après la récupération, par le second dispositif RAN, du contexte du dispositif terminal à partir du premier dispositif RAN,
l'envoi (305), par le second dispositif RAN (122, 800), d'un cinquième message au premier dispositif RAN (121), dans lequel le cinquième message est utilisé pour donner une instruction au premier dispositif RAN (121) de libérer le contexte du dispositif terminal (130).

4. Procédé (300) selon la revendication 1, comprenant en outre, lorsque les informations d'instruction de libération du contexte du dispositif terminal comprennent au moins l'un parmi le fait de donner une instruction d'effectuer un équilibrage de charge, le fait de donner une instruction au dispositif terminal d'effectuer une mise à jour RNA, ou le fait de donner une instruction au dispositif terminal d'effectuer une TAU ou une RAU,
l'envoi (306), par le second dispositif RAN (122, 800), d'un sixième message au premier dispositif RAN (121), dans lequel le sixième message comprend le second identifiant du dispositif terminal (130), et le sixième message est utilisé pour demander le contexte du dispositif terminal (130) ; et
la réception (307), par le second dispositif RAN (122, 800), d'un septième message envoyé par le premier dispositif RAN (121), dans lequel le septième message comprend le second identifiant du dispositif terminal (130) et le contexte du dispositif terminal (130), et le septième message est un message de réponse du sixième message.

5. Dispositif de communication (122, 800), comprenant :
un module de réception (801), configuré pour : recevoir un premier message envoyé par un premier dispositif de réseau d'accès radio, RAN, (121), dans lequel le premier message comprend un premier identifiant d'un dispositif terminal (130), dans lequel le dispositif terminal (130) est dans un état inactif, dans lequel le premier dispositif RAN (121) est un dispositif RAN d'ancrage qui stocke un contexte du dispositif terminal (130) et maintient une connexion entre un côté RAN du dispositif terminal (130) et un plan de commande d'un côté de réseau central, CN, du dispositif terminal (130), et dans lequel le dispositif de communication (122, 800) est un dispositif RAN mis en attente du dispositif terminal (130) et n'a pas le contexte du dispositif terminal (130) ; et recevoir un troisième message envoyé par le dispositif terminal (130), dans lequel le troisième message comprend un second identifiant du dispositif terminal (130), et le troisième message est utilisé pour demander la reprise d'une connexion de commande de ressource radio, RRC ;
un module de traitement (802), configuré pour déterminer, selon des informations d'instruction de libération du contexte du dispositif terminal (130), le fait d'effectuer une transition d'état sur le dispositif terminal (130) ; et
un module d'envoi (803), configuré pour : envoyer un deuxième message au dispositif terminal (130), dans lequel le deuxième message comprend le premier identifiant du dispositif terminal (130), et le deuxième message est utilisé pour rechercher le dispositif terminal (130) ; et envoyer un quatrième message au dispositif terminal (130) selon les informations d'instruction de libération du contexte du dispositif terminal (130), dans lequel le quatrième message est utilisé pour donner une instruction au dispositif terminal (130) d'effectuer une transition d'état ;
**caractérisé en ce que** le premier message comprend en outre les informations d'instruction de libération du contexte du dispositif terminal (130), dans lequel les informations d'instruction de libération du contexte du dispositif terminal (130) comprennent au moins l'un de ce qui suit : donner une instruction au dispositif terminal (130) d'effectuer une transition vers un mode veille, donner une instruction d'effectuer un équilibrage de charge, donner une instruction au dispositif terminal (130) d'effectuer une mise à jour de zone de notification basée sur RAN, RNA, ou donner une instruction au dispositif terminal (130) d'effectuer une mise à jour de zone de suivi, TAU, ou une mise à jour de zone d'enregistrement, RAU ; et
le premier identifiant du dispositif terminal (130) est un identifiant de strate de non-accès attribué par le côté CN au dispositif terminal (130) et le second identifiant du dispositif terminal (130) est un identifiant de strate d'accès attribué par le côté RAN au dispositif terminal (130).

6. Dispositif de communication (122, 800) selon la revendication 5, dans lequel, lorsque les informations d'instruction de libération du contexte du dispositif terminal comprennent le fait de donner une instruction au dispositif terminal d'effectuer une transition vers un mode veille,
le module de réception (801) est en outre configuré pour recevoir un message qui est envoyé par le dispositif terminal (130) et qui est utilisé pour indiquer que la transition vers le mode connecté est terminée ; et
le module d'envoi (803) est en outre configuré pour envoyer un message utilisé pour donner une instruction au dispositif terminal (130) d'effectuer une transition vers le mode veille.

7. Dispositif de communication (122, 800) selon la revendication 5, dans lequel, lorsque les informations d'instruction de libération du contexte du dispositif terminal comprennent au moins l'un parmi le fait de donner une instruction d'effectuer un équilibrage de charge, le fait de donner une instruction au dispositif terminal d'effectuer une mise à jour RNA, ou le fait de donner une instruction au dispositif terminal d'effectuer une TAU ou une RAU, le dispositif de communication est configuré pour récupérer le contexte du dispositif terminal à partir du premier dispositif RAN, puis
le module d'envoi (803) est en outre configuré pour envoyer un cinquième message au premier dispositif RAN (121), dans lequel le cinquième message est utilisé pour donner une instruction au premier dispositif RAN (121) de libérer le contexte du dispositif terminal (130).

8. Dispositif de communication (122, 800) selon la revendication 5, dans lequel, lorsque les informations d'instruction de libération du contexte du dispositif terminal comprennent au moins l'un parmi le fait de donner une instruction d'effectuer un équilibrage de charge, le fait de donner une instruction au dispositif terminal d'effectuer une mise à jour RNA, ou le fait de donner une instruction au dispositif terminal d'effectuer une TAU ou une RAU,
le module d'envoi (803) est en outre configuré pour envoyer un sixième message au premier dispositif RAN (121), dans lequel le sixième message comprend le second identifiant du dispositif terminal (130), et le sixième message est utilisé pour demander le contexte du dispositif terminal (130) ; et
le module de réception (801) est en outre configuré pour recevoir un septième message envoyé par le premier dispositif RAN (121), dans lequel le septième message comprend le second identifiant du dispositif terminal (130) et le contexte du dispositif terminal (130), et le septième message est un message de réponse du sixième message.

9. Procédé de communication (300) selon la revendication 1 ou dispositif de communication (122, 800) selon la revendication 5, dans lequel les informations d'instruction sont utilisées pour donner une instruction au dispositif terminal (130) d'effectuer une transition vers un mode veille, et le quatrième message est utilisé pour donner une instruction au dispositif terminal (130) d'effectuer une transition vers le mode veille.

10. Procédé de communication (300) selon la revendication 1 ou dispositif de communication (122, 800) selon la revendication 5, dans lequel la transition d'état comprend au moins l'une des opérations suivantes effectuées sur le dispositif terminal (130) : une transition d'un mode inactif vers un mode veille, une transition d'un mode inactif vers un mode inactif, une transition d'un mode inactif vers un mode connecté, ou une transition d'un mode inactif vers un mode connecté puis vers un mode veille.

11. Procédé de communication (300) selon la revendication 1 ou dispositif de communication (122, 800) selon la revendication 5, dans lequel le fait que le quatrième message soit utilisé pour donner une instruction au dispositif terminal (130) d'effectuer une transition d'état est spécifiquement :
lorsque le premier message comprend des informations d'instruction pour donner une instruction d'effectuer un équilibrage de charge, le quatrième message est utilisé pour donner une instruction au dispositif terminal (130) d'effectuer une transition vers un mode veille ou de rester dans un mode inactif ;
lorsque le premier message comprend des informations d'instruction pour donner une instruction au dispositif terminal (130) d'effectuer une mise à jour RNA, le quatrième message est utilisé pour donner une instruction au dispositif terminal (130) de rester dans un mode inactif ; ou
lorsque le premier message comprend des informations d'instruction pour donner une instruction au dispositif terminal (130) d'effectuer une TAU/RAU, le quatrième message est utilisé pour donner une instruction au dispositif terminal (130) d'effectuer une transition vers un mode veille ou un mode connecté.

12. Procédé de communication (300) selon la revendication 1 ou dispositif de communication (122, 800) selon la revendication 5, dans lequel le contexte du dispositif terminal (130) comprend l'un quelconque de ce qui suit : un contexte de sécurité du dispositif terminal (130), un débit binaire maximal agrégé du dispositif terminal (130), ou des informations sur une session en cours du dispositif terminal (130).

13. Support de stockage lisible par ordinateur, comprenant une instruction, dans lequel, lorsque l'instruction est exécutée sur un dispositif de communication (122, 800), le dispositif de communication (122, 800) est activé pour mettre en œuvre le procédé (300) selon l'une quelconque des revendications 1 à 4 ou 9 à 12.
